# EUROPEAN PATENT SPECIFICATION

(11) **EP 4 579 570 B1**
(45) Date of publication and mention of the grant of the patent: **25.03.2026**
(21) Application number: 25176362.9
(22) Date of filing: 16.06.2021
(51) Int. Cl.: G06Q 10/063, G06Q 50/02

(54) **TURF MANAGEMENT SYSTEMS AND METHODS**
RASENVERWALTUNGSSYSTEME UND -VERFAHREN
SYSTÈMES ET PROCÉDÉS DE GESTION DE GAZON

(30) Priority: 25.06.2020 US 202063044016 P
(43) Date of publication of application: 02.07.2025
(62) Divisional of application: 21748697.6
(73) Proprietor: The Toro Company, Bloomington, MN 55420-1196 (US)
(72) Inventor: FRIELL, Joshua Craig, Bloomington, 55420-1196 (US); OLKIN, Terry Michael, Bloomington, 55420-1196 (US)
(74) Representative: J A Kemp LLP

(56) References cited:
- US-A1- 2012 084 115
- US-A1- 2016 148 104

## Description

The present disclosure generally relates to a system of turf management in a work region using modeling of environmental conditions (e.g., climate). US 2012/084115 A1 and US 2016/148104 A1 disclose background art to the invention.

### SUMMARY

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes. Techniques of this disclosure generally relate to systems and methods of turf management in a work region using modeling of environmental conditions. The systems and methods may include external data streams (e.g., historical data, atmospheric measurements and predictions, etc.) and machine learning or feedback loops (e.g., recorded decisions and outcomes from those decisions) to model turf conditions within the work region and determine an estimated turf condition. Further, the work region may be divided into a plurality of zones such that each zone may be managed independently or in combination with one or more different zones. An estimated turf condition may be determined for each zone of the work region by a predictive turf model and a recommended action may be generated for each zone based on the corresponding estimated turf condition input into a suggestion model. In one or more embodiments, turf maintenance equipment may be provided a command to carry out the recommended action (e.g., automatically or at the direction of the user) to manage the turf in the associated zone.

In an embodiment, a method of managing turf in a work region includes providing an estimated turf condition for each zone of a plurality of zones dividing the work region. The method also includes generating a recommended action for each zone based on the associated estimated turf condition for each zone as an input to a suggestion model and providing a command to equipment to carry out the recommended action to manage the turf in the associated zone. Further, the method includes measuring a turf condition in response to the action carried out to manage the turf in the associated zone. Further yet, the method includes updating the suggestion model in response to the measured turf condition and a desired turf condition based on the action carried out to manage the turf.

The summary is not intended to describe each aspect or every implementation of the present disclosure. A more complete understanding will become apparent and appreciated by reference to the following detailed description and claims taken in view of the accompanying figures of the drawing.

### BRIEF DESCRIPTION OF THE DRAWINGS

Exemplary embodiments will be further described with reference to the drawing, wherein:
FIG. 1 is a schematic diagram of an illustrative system for managing turf in a work region including a plurality of zones and one or more sensors in accordance with the present disclosure;
FIG. 2 is a schematic diagram of an illustrative predictive turf model of the system of FIG. 1 in accordance with the present disclosure;
FIG. 3 is a flow diagram of one example of a method of managing turf in a work region including a predictive turf model in accordance with the present disclosure;
FIG. 4 is a flow diagram of one example of a method of monitoring multiple sets of zone sensor data for the predictive turf model of FIG. 3 in accordance with the present disclosure;
FIG. 5 is a flow diagram of one example of updating the predictive turf model of FIG. 3 in accordance with the present disclosure;
FIG. 6 is a flow diagram of one example of a method of managing turf in a work region including a suggestion model in accordance with the present disclosure;
FIG. 7 is a block diagram of a recommendation system according to an example embodiment;
FIG. 8 is a diagram of a location hierarchy usable in a system according to an example embodiment; and
FIG. 9 is a flowchart of a method according to an example embodiment.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way.

### DETAILED DESCRIPTION

In the following detailed description of illustrative embodiments, reference is made to the accompanying figures of the drawing which form a part hereof. It is to be understood that other embodiments, which may not be described and/or illustrated herein, are certainly contemplated.

All headings provided herein are for the convenience of the reader and should not be used to limit the meaning of any text that follows the heading, unless so specified. Moreover, unless otherwise indicated, all numbers expressing quantities, and all terms expressing direction/orientation (e.g., vertical, horizontal, parallel, perpendicular, etc.) in the specification and claims are to be understood as being modified in all instances by the term "exactly" or "about." The term "or" is generally employed in its inclusive sense, for example, to mean "and/or" unless the context clearly dictates otherwise. The term "and/or" (if used) means one or all of the listed elements or a combination of any two or more of the listed elements. The term "e.g." is used as an abbreviation for the Latin phrase *id est* and means "that is." The term "e.g.," is used as an abbreviation for the Latin phrase *exempli gratia* and means "for example."

Various techniques are presently used to decide how turf is managed. For example, observations and/or measurements of soil and/or plant conditions (e.g., using sensors) may be utilized to determine turf management. Specifically, input data from the observations and measurements may help to present a real-time picture of the turf condition, which can then be managed (e.g., treated).

The present disclosure provides systems and methods of turf management in a work region (e.g., divided into a plurality of zones) using modeling of environmental conditions (e.g., climate). A predictive turf model may be used to determine an estimated turf condition for each zone of the plurality of zones such that a recommended action may be generated for managing the turf in the associated zone. The predictive turf model may incorporate atmospheric/environmental measurements and predictions, recorded human decisions, and historic outcomes of decisions as input data sources. Further, the predictive model may be updated through a feedback loop to make recommendations based on previous behavior, results therefrom, and current trends.

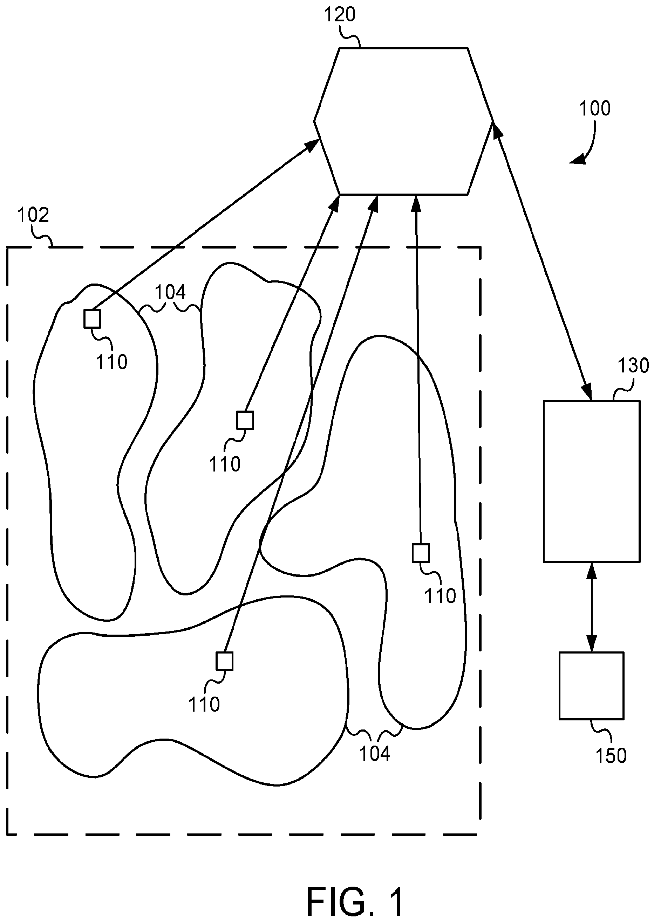

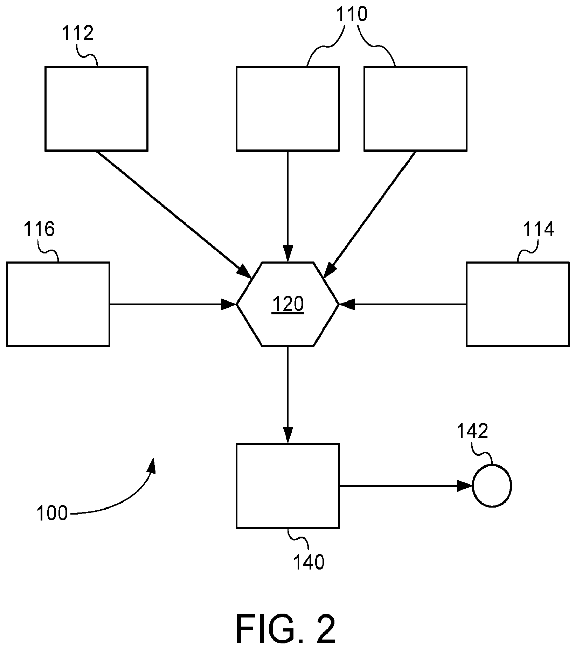

The system 100 described herein is illustrated in FIGS. 1 and 2. For example, FIG. 1 illustrates a work region 102 divided into a plurality of zones 104. The work region 102 may include any suitable terrain for which turf may be managed. For example, the work region 102 may be defined within a golf course, recreational facility, commercial or residential property, roadside, etc.

The work region 102 may include various localized environmental conditions (e.g., micro-climates). In other words, different portions of the work region 102 may experience different environmental conditions (e.g., climates) and, therefore, may be managed or treated differently. For example, different portions of the work region 102 may be managed or treated differently as it pertains to irrigation, aeration, fumigation, fertilization, cultivation, mowing, chemical application, blowing, rolling, etc. In one or more embodiments, each of those portions of the work region 102 may be affected by a different or same disease. For example, one portion of the work region 102 may be affected by one type of disease, while another portion of the work region 102 may be affected by another type of disease or no disease at all. Some types of diseases of turf may include, for example, Pythium Blight, Brown patch, Summer patch, Take All Patch, Dollar Spot, Gray Leaf Spot, Anthracnose, Fusarium patch, Microdochium patch, Red Thread, etc.

As such, the work region 102 may be divided into a plurality of zones 104, with each zone 104 having similar environmental conditions (e.g., a similar micro-climate) within the boundary of the zone. By grouping portions of the work region 102 that have common environmental conditions (e.g., micro-climates) together into zones 104, the zones 104 may be managed differently as appropriate. Each zone 104 of the plurality of zones may define any suitable size and shape. In some embodiments, each zone 104 may be sized and shaped so as to capture homogeneous environmental conditions in the same zone 104. Further, there may be any number of zones 104 in a given work region 102. A greater number of zones 104 may result in an increased precision of customization for modeling the work region 102 (e.g., because the work region 102 would be divided into more portions). In some embodiments, the number of zones 104 may be selected to facilitate customized maintenance of turf and may reduce waste of consumable maintenance materials, such as fungicide, that may otherwise be applied evenly to the entire work region 102.

Each of the zones 104 may include a node 110 connected to the associated zone 104 (e.g., because each node 110 defines the associated zone 104) to provide a representation of the micro-climate of the zone 104. Therefore, the zone 104 may be defined as any portion of the work region 102 that may be characterized by a single node. The node 110 may or may not be physically located within the associated zone 104. In other words, the node 110 may be representative of the associated zone 104 whether or not the node is physically located within the zone 104 (e.g., act as an indicator spot). For example, a single node 110 may be used to represent two similar, non-contiguous areas that form a zone 104. Further, the node 110 may be portable (e.g., located on movable equipment, a drone, etc.) or stationary.

Each node 110 may include one or more sensors, a communication source (e.g., a radio, an antenna, a transmitter, a receiver, a transceiver, etc.), and a power supply (e.g., a battery, solar panel, ultracapacitor, etc.). The node 110 may be configured to monitor and measure environmental data and trends of the associated zone 104. For example, the zone characteristics of the turf monitored and measured proximate the location of the node 110 may include moisture, temperature, salinity, ambient atmospheric conditions, subsurface soil conditions, light intensity, light spectral content, wind speed and direction, humidity, etc. Measurements of the zone characteristics may be grouped together into sets of zone sensor data that is associated with the corresponding zone 104. The nodes 110 may be located underground, above ground, or partially in the ground.

In one or more embodiments, the sets of zone sensor data (e.g., from the node 110) may be transmitted to a network 120 (e.g., a cloud, a server, etc.) that aggregates all of the multiple sets of zone sensor data from each zone 104. The network 120 may have any suitable configuration. Therefore, the network 120 may monitor the multiple sets of zone sensor data from the nodes 110. Further, the network 120 may include or be operably connected to a controller 130. The controller 130 may be configured to determine an estimated turf condition for each zone 104 based on an output of a predictive turf model for each zone, as will be described further herein. In other embodiments, the network 120 may determine the estimated turf condition. Further, the controller 130 may be configured to generate a recommended action for each zone based on the associated estimated turf condition for each zone with a suggestion model, as will be described further herein. In other words, the controller 130 may determine a how the turf for the associated zone 104 may be affected (e.g., a risk, a need, and/or a value) based on the data inputs and may determine an action to manage the turf in the associated zone 104 to address the risk, the need, and/or the value. It is noted that, in one or more embodiments, the action to manage the turf may include taking no action or doing nothing to the turf.

The controller 130 or the network 120 may include one or more processors that receive various inputs and executes one or more computer programs or applications stored in memory. The memory may include computer-readable instructions or applications that, when executed, e.g., by the processor, cause the controller to perform various calculations and/or issue commands. That is to say, the processor and memory may together define a computing apparatus operable to process input data and generate the desired output to one or more components/devices. For example, the processor may receive various input data including from the one or more sensors to be input into a variety of different models or algorithms.

The system may be described as having multiple controllers. In general, as used herein, the term "controller" may be used to describe components of a "system" that provide commands to control various other components of the system. In view of the above, it will be readily apparent that the functionality of the controller may be implemented in any manner known to one skilled in the art. For instance, the memory may include any volatile, non-volatile, magnetic, optical, and/or electrical media, such as a random-access memory (RAM), read-only memory (ROM), non-volatile RAM (NVRAM), electrically-erasable programmable ROM (EEPROM), flash memory, and/or any other digital media. While shown as both being incorporated into the controller, the memory, and the processor could be contained in separate modules.

The processor may include any one or more of a microprocessor, a controller, a digital signal processor (DSP), an application specific integrated circuit (ASIC), a field-programmable gate array (FPGA), and/or equivalent discrete or integrated logic circuitry. In some embodiments, the processor may include multiple components, such as any combination of one or more microprocessors, one or more controllers, one or more DSPs, one or more ASICs, and/or one or more FPGAs, as well as other discrete or integrated logic circuitry. The functions attributed to the controller and/or processor herein may be embodied as software, firmware, hardware, or any combination of these. Certain functionality of the controller may also be performed with Internet-connected cloud computing or other distributed computing systems operably connected to the processor.

Further, in one or more embodiments, the system may include turf maintenance equipment 150 (e.g., a vehicle) that is configured to take an action to manage or treat the turf in the associated zone 104 based on the recommended action. The turf maintenance equipment 150 may include any suitable equipment that can manage or treat turf. For example, the turf maintenance equipment 150 may include any equipment that can manage or treat turf using irrigation, aeration, fumigation, fertilization, cultivation, mowing, chemical application, blowing, rolling, etc. The turf maintenance equipment 150 may include an autonomous vehicle that is not actively controlled by a user or may include an operator-controlled (e.g., including remotely-controlled) vehicle. In the example of an autonomous vehicle, the turf maintenance equipment 150 may automatically carry out commands based on the recommended action from the controller 130 or may carry out commands provided by an operator (e.g., in response to the operator receiving the estimated turf condition and/or recommended action).

In addition to the nodes 110 providing multiple sets of zone sensor data to the network 120, various other sources may be transmitted to the network to be provided to the predictive turf model 140 as shown in FIG. 2. For example, data may be provided to the network 120 (and the predictive turf model 140 thereafter) through external data sources 112. External data sources 112 may include, for example, historical outcome data of the work region 102, historical sensor data of the work region 102, information pertaining to previous action taken to manage conditions at the associated zone 104, environmental conditions and trends (e.g., local/regional weather history), data streamed from other locations or sources, future atmospheric weather prediction data, local regulatory information (e.g., watering restrictions), biological data such as species and/or cultivars of vegetation present, spatial data such as topography, soil properties (e.g., that can further characterize the work region), remote weather station data, etc. In other words, the external data sources 112 may include anything that may make information usable and meaningful to, e.g., calibrate, format and/or interpret instructions, units, etc.

Also, for example, data may be provided to the network 120 (and the predictive turf model 140 thereafter) through user input sources 114. The user input sources 114 may include, for example, observations, previous actions to manage or treat turf, outcomes as a result of previous actions, user preferences or priorities, dates or times, chemical product formulations, dimensions (e.g., defining the zone 104, height of mowed turf, etc.). Further, a user (e.g., an administrator) may input configurations including, e.g., a model type (e.g., random forest, logistic regression, linear regression, etc.) or other model parameters (e.g., the number of trees in a random forest model).

Further, for example, data may be provided to the network 120 (and the predictive turf model 140 thereafter) through additional sensors 116 (e.g., sensors other than those located at the nodes 110) provided by any suitable equipment. The additional sensors 116 may include, for example, optical sensors, electromagnetic sensors, force sensors, pressure or flow sensors, etc. Further, the equipment upon which the additional sensors 116 are positioned may include, e.g., drones, connected or smart equipment, mowing and cultivation equipment, irrigation sprinkler heads, tractors, sprayers, static stations, etc. For example, in one or more embodiments, a smart sprayer may report data on previous chemical applications. Furthermore, in one or more examples, the data provided by the additional sensors 116 may include "raw" or pre-processed data. For example, an image may be processed to extract a quantitative metric (e.g., average pixel value, number of objects present, etc.) that may then be passed to the model (e.g., instead of transmitting the image itself). It is noted that any one or more sensors described herein (e.g., associated with the nodes 110 and/or the additional sensors 116 may be portable or stationary).

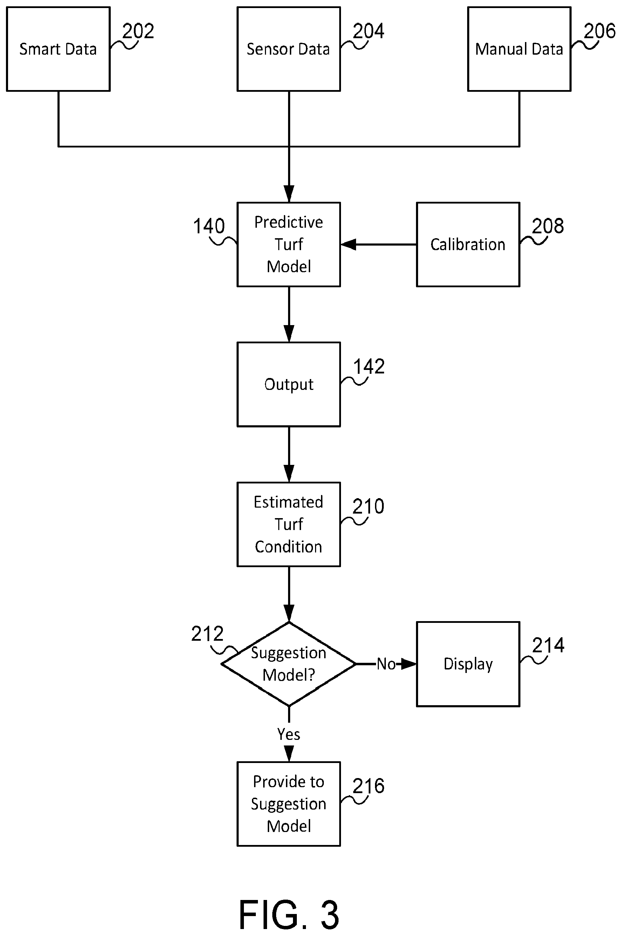

As shown in FIG. 3, the nodes 110 may provide a set of zone sensor data 204 as an input to the predictive turf model 140, the additional sensors 116 may provide additional data 202 as an input to the predictive turf model 140, and/or the user input sources 114 may provide manual data 206 as an input to the predictive turf model. Additionally, the predictive turf model 140 may be calibrated 208 using the external sources 112 described herein. In one or more embodiments, for example, local soil moisture, light conditions, and ambient temperature from a sensor node 110, along with wind speed obtained from a remote weather station and turf species information (e.g., an external data source 112) may be used to determine the risk for drought stress or need for turf irrigation on a given day. That value may also be influenced or modified by recent irrigation activity or water applications reported by a connected irrigation system flow meter (e.g., an additional sensor 116) and may also be influenced by user observations or preferences for turf conditions (e.g., a user input source 114).

Thereafter, the predictive turf model 140 may determine an estimated turf condition 210 for each zone 104 based on an output 142 of the predictive turf model 140 for each zone 104. The output 142 may describe the characteristics of the turf in the associated zone 104. For example, the output 142 may include a parameter pertaining to a risk, a need, and/or a value for each associated zone 104. Specifically, the risk may define, e.g., a percentage or score for which the turf of the associated zone 104 may be at risk for developing disease, the need may define, e.g., a score or a parameter for irrigation application to maintain a given soil moisture content, and the value may define, e.g., a score or a parameter for turf growth. For example, in one or more embodiments, the risk of drought stress may be used to determine the estimated present condition of turf drought.

As such, the estimated turf condition 210 may describe the expected condition of the turf in the associated zone 104 based on the provided data inputs. The turf in the associated zone 104 may then be managed or treated, based on the estimated turf condition 210, to result in the desired turf condition. In one or more embodiments, managing or treating the turf may include doing nothing to the turf or taking no action. By determining the estimated turf condition 210, the turf may be proactively managed or treated (e.g., not only managing or treating a current condition, but also managing or treating a potential future condition). Further, by separating the work region 102 into a plurality of zones 104, each zone 104 may be more accurately predicted for that specific micro-climate (e.g., allowing for a more targeted approach to managing and treating the turf in the associated zone 104).

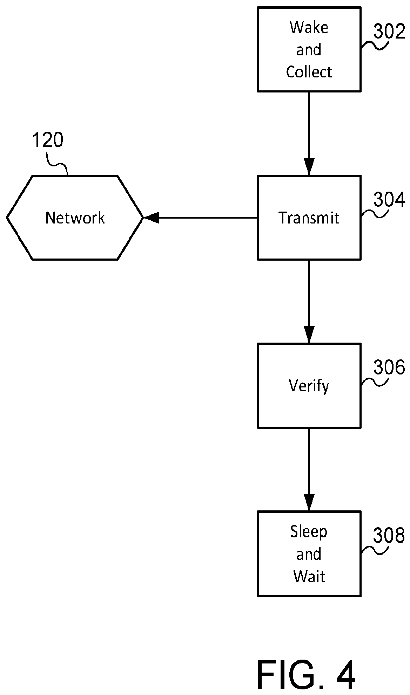

Monitoring the nodes 110 to provide a set of zone sensor data to the predictive turf model is illustrated in FIG. 4. For example, a sensor of a node 110 may wake up and collect 302 the sets of zone sensor data for the associated zone. Next, the data (e.g., the sets of zone sensor data) may be transmitted 304 to the network 120 (e.g., such that the data may be provided to the predictive turf model 140). The data may be transmitted to the network 120 in any suitable way. For example, one or more components of the network 120 may be connected wirelessly or by wire to transmit data. For example, wireless connections may be made by a cellular, WiFi, Bluetooth, or other electromagnetic based communication interface. Additionally, in one or more embodiments, the data may also be collected from the input sources 114 and/or the additional sensors 116 and transmitted to the network 120.

Further, in one or more embodiments, the data (e.g., the sets of zone sensor data) that is collected may be verified 306. In other words, the system may ensure that the data was successfully transmitted and received. After the data has been collected, transmitted, and/or verified, the nodes 110 may be put to sleep 308 to wait for an additional set of data to be collected 302 at a future time.

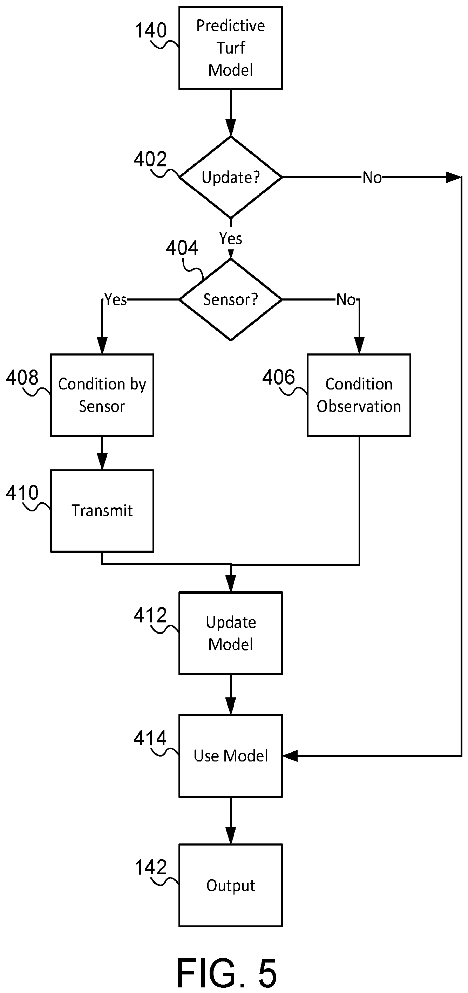

As shown in FIG. 5, the predictive turf model 140 may be updated to include feedback from previous cycles. For example, the predictive turf model 140 may be updated in response to the zone sensor data and a measured turf condition. Specifically, the actual turf condition may be measured (e.g., by a sensor or observation) for at least one zone 104 of the plurality of zones. The measured turf condition for the at least one zone 104 may be compared to the estimated turf condition at that time (e.g., whether or not the turf in the at least one zone has been managed or treated). In other words, the system may compare the actual measured turf condition to the expected turf condition (e.g., in light of the predictive turf model 140 and treating or not treating the turf). Thereafter, the predictive turf model 140 may be updated to account for the difference between the estimated turf condition and the measured/observed turf condition. In one or more embodiments, for example, updating the predictive turf model 140 may be based on how treatment/management of the turf in the at least one zone 104 corresponds with what actually happened to the turf in the at least one zone 104. As such, the predictive turf model 140 may "learn" through this feedback loop. More specifically, the predictive turf model 140 may be updated based on the recorded decisions and outcomes using a computational method such as, e.g., a Random Forest, an Artificial Neural Network, a Decision Tree, Logistic Regression, or other similar technique. Furthermore, in one or more embodiments, the predictive turf model 140 may be updated independent from past treatment/management. For example, the predictive turf model 140 may be updated based on environmental and observational measurement data transmitted to the network 120.

In one or more embodiments, a user may be prompted whether the predictive turf model 140 should be updated 402. If the predictive turf model 140 is not updated, then the process proceeds to using 414 the model as illustrated in FIG. 3 and described therewith. If the predictive turf model 140 is updated, in one or more embodiments, a method of measuring turf condition may be determined (e.g., whether or not there is a sensor to measure turf condition 404). For example, in one or more embodiments, the condition of the turf or turf outcome may be measured by observation 406 (e.g., an observed turf condition). Specifically, a user may determine the condition of the turf for at least one zone 104 (e.g., how the previous treatment/management affected the turf). Further, e.g., the user may identify drought, disease, or other biotic or abiotic stresses by visual inspection. In one or more embodiments, the condition of the turf may be determined for the at least one zone 104 without consideration of the previous turf treatment/management.

In other embodiments, the turf condition may be measured 408 by one or more turf condition sensors. The one or more turf condition sensors may take any suitable form to measure the present condition of the turf in at least one zone of the plurality of zones. For example, the one or more turf condition sensors may include a light reflectance sensor, digital image analysis, surface hardness sensor, penetrometer, moisture sensor, etc. Specifically, the light reflectance sensor may provide an estimate of turf conditions by comparison of the amount of reflected light in one or more wavelengths corresponding to various types of biotic or abiotic plant stress response. The one or more turf condition sensors may be statically located within or proximate the associated zone, may be attached to equipment (e.g., the turf maintenance equipment 150) or may be attached to a vehicle that moves through the associated zone 104. For example, the one or more turf condition sensors may be manually operated or autonomous and may be ground-based or aerial (e.g., a drone).

As described above, the measured or observed turf condition may be compared to the estimated turf condition to update 412 the predictive turf model 140. Thereafter, the updated predictive turf model may be used 414 to provide an updated output 142 for determining an updated estimated turf condition. More specifically, a subsequent (or updated) estimated turf condition may be determined for each zone based on an output 142 of the updated predictive turf model for each zone.

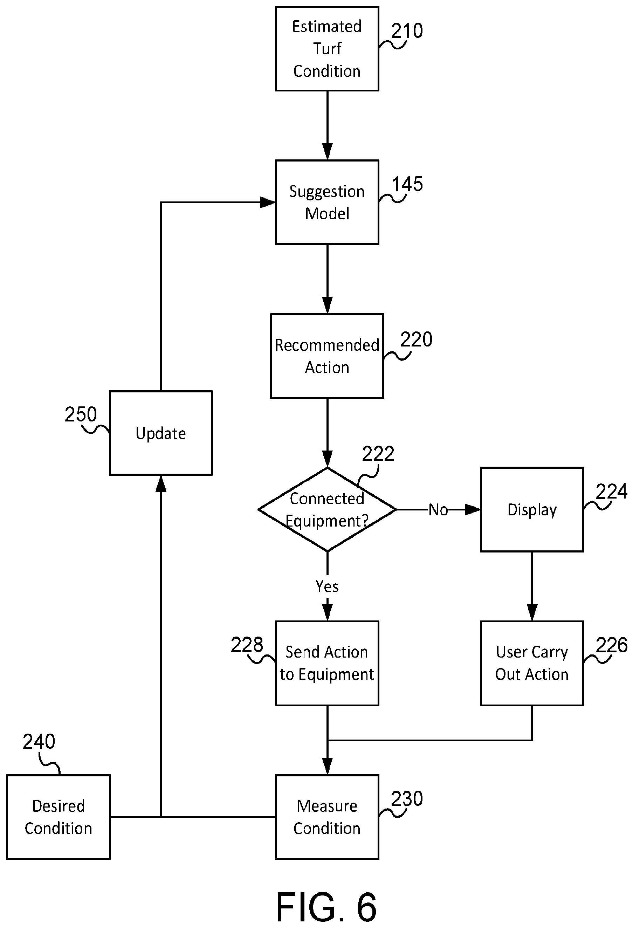

In an embodiment, a suggestion model 145 is used to further process the estimated turf condition 210 (e.g., as illustrated in FIG. 6) and provide a recommended action 220. The suggestion model 145 may determine a course of action (e.g., the best course of action) to manage or treat the turf based on the estimated turf condition 210. In other words, based on all of the known data and previous performance, the suggestion model 145 generates a recommended action 220. The recommended action 220 may include a deliberate action to treat or manage the turf or may include no action or doing nothing to the turf (e.g., because the estimated turf condition is within a certain set of operating parameters).

After the estimated turf condition 210 is determined (e.g., based on the predictive turf model or the updated predictive turf model), the system may query 212 whether the suggestion model should be used. If the suggestion model is not used, the estimated turf condition may be displayed 214 to the user and if the suggestion model is used, the estimated turf condition may be provided 216 to the suggestion model.

As shown in FIG. 6, the estimated turf condition 210 is provided to the suggestion model 145 for each zone of the plurality of zones. From the suggestion model 145, a recommended action 220 is generated for each zone 104 based on the associated estimated turf condition 210 for each zone 104 as an input to the suggestion model 145. In one or more embodiments, the recommended action 220 for each zone may be recorded and/or transmitted to the network. Further, as it pertains to the updated predictive turf model, a subsequent recommended action for each zone may be generated based on the associated subsequent estimated turf condition for each zone.

The recommended action 220 is used to provide a command to equipment (e.g., the turf maintenance equipment 150) to carry out the recommended action 220 to manage or treat the turf in the associated zone 104. For example, in one or more embodiments, the recommended action 220 for each zone may be displayed 224 to the user such that the user may carry out the action 226 (e.g., by manually carrying out the recommended action 220 or providing a command to the equipment to carry out the recommended action 220). In other embodiments, the recommended action 220 may send 228 or automatically command connected equipment (e.g., smart equipment) to carry out the recommended action to manage or treat the turf in the associated zone 104. Specifically, in one or more embodiments, the turf maintenance equipment 150 (e.g., as illustrated in FIG. 1) may be configured to take an action to manage or treat the turf in the associated zone 104 based on the recommended action 220. In one or more embodiments, the presence of connected equipment may be queried 222 to determine whether the recommended action 220 may be displayed 224 to the user or sent 228 to the equipment.

The recommended action 220 may include a variety of different actions to manage or treat the turf in the associated zone 104. For example, the turf may be managed or treated using irrigation, aeration, fumigation, fertilization, cultivation, mowing, chemical application, blowing, rolling, etc. In one or more embodiments, the actual action carried out may be recorded and/or transmitted to the network to, e.g., be used in updating the suggestion model 145.

After the managing or treating turf in the associated zone, the turf condition is measured 230 in response to the recommended action 220 carried out on the turf in the associated zone 104. For example, as described herein, the condition of the turf in the associated zone 104 may be measured to determine the effectiveness of the management or treatment protocol. Specifically, the turf condition may be measured by collecting data from one or more sensors, observations, or feedback. For example, the one or more sensors may include the light reflectance sensors described herein. Also, for example, observations of the turf condition may include visual assessments of turf quality, disease incidence, weed encroachment, pest infestation, or other qualitative or quantitative measures of turf conditions or stress response. Further, for example, feedback of the turf condition may include assessments of quality, playability, surface conditions, resident reports, user comments, other input from observers and users regarding usability and perception, or other qualitative or quantitative measures of comparison to a desired turf condition.

Thereafter, the suggestion model 145 is updated 250 in response to the measured turf condition 230 and a desired turf condition 240 based on the action carried out to manage or treat the turf. In other words, the measured turf condition 230 may be compared to the desired turf condition 240 such that the suggestion model 145 may be updated to more accurately generate recommended actions in future iterations. As such, the suggestion model 145 may "learn" through this feedback loop. More specifically, the suggestion model 145 may be updated based on the recorded decisions and outcomes using a computational method such as, e.g., a Random Forest, an Artificial Neural Network, a Decision Tree, or other similar technique. Furthermore, the subsequent recommended action may more accurately resolve any issues with the turf due to the updated suggestion model.

For example, in one or more embodiments, the environmental conditions (e.g., no rain for multiple days) and other system inputs to the predicted turf model 140 may determine a risk of drought stress to the turf. Based on the estimated turf condition 210 therefrom, the suggestion model 145 may generate a recommended action of applying 0.2 inches of irrigation for the associated zone 104. A command may be provided to administer the desired 0.2 inches of irrigation in the associated zone 104. Thereafter, the condition of the turf may be measured or observed 230 and determined as having too much moisture when compared to the desired turf outcome 240. The suggestion model 145 may then be updated to suggest administering 0.1 inches of irrigation for a similar estimated turf condition 210 because of the difference between the measured turf condition 230 and the desired turf condition 240.

In additional embodiments described below, an advanced expert system can be used to help turf managers make optimal agronomic solutions. The solutions may include recommending actions based on a multitude of data sources including localized real-time sensors, historical data, weather forecasts, and expert user input and feedback. The results of analyzing all this data (which could range into the millions of individual data points) are recommendations to achieve the optimal outcome where optimal is defined as minimizing costs and resources while maximizing the health and overall aesthetics of some physical environment.

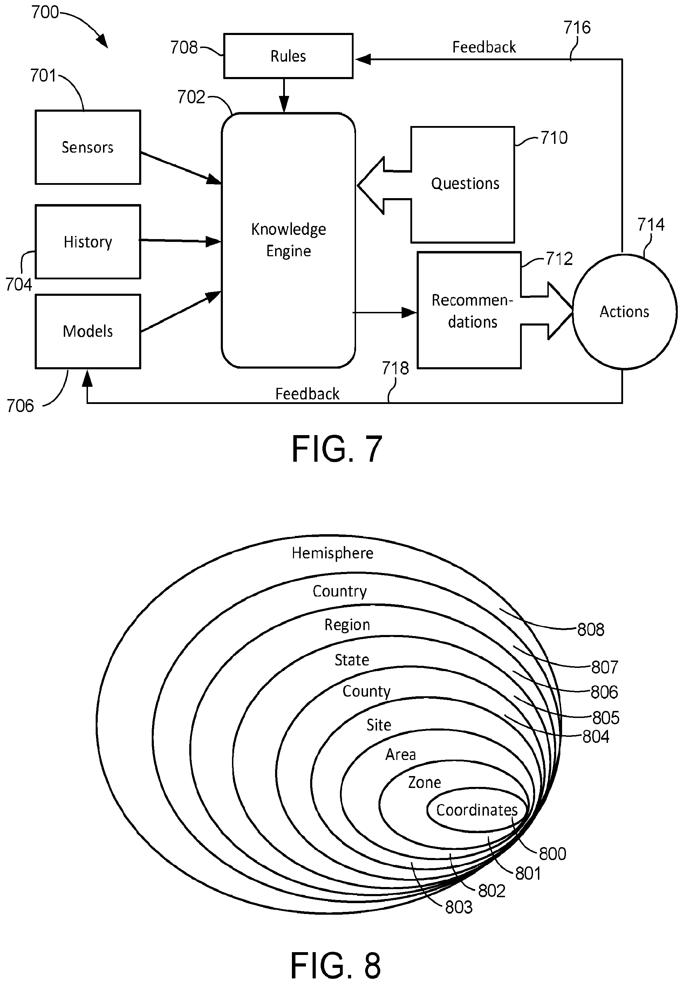

An architecture of a system 700 according to an example embodiment is shown in FIG. 7. In this figure, sensor data 701 may be received from automated devices and services that send raw data readings about their environment to a knowledge engine 702 of the system 700. The sensor data 701 can originate from in-ground sensors, maintenance equipment sensors, weather stations, weather forecasting services, aerial images (e.g., from drones), etc. While not required, two common attributes of each data point are its location and the time at which the reading was taken. Sensor data 701 is stored in a historical database 704 so that it can be used in the future for continued analysis. Therefore, this data set can easily grow into the billions of data points over time. Being able to quickly find the right set of data can ensure that system 700 is able to properly scale while returning results within reasonable system performance constraints.

The history data 704 (also known as *facts*) represents not only the storage of sensor data 701 as it is being collected, but may also include any almanac data that was previously collected or retrieved from other sources that will be relevant in computing results. The models block 706 represents formulas and algorithms that are used to generate interim results from facts. The input to these models 706 is an appropriate set of facts that have been filtered by location and time as specified by the questions 710 being asked of the system.

The rules 708 are a set of conditional statements that can be used to deduce new information from facts, interim results from models, and any previous deductions. The rules 708 may be in the form of **IF** *antecedent* **THEN** *consequent.* The rules 708 will be discussed in more detail further below. It should be noted that, initially, these rules 708 may be created by human experts. However, over time, various other methods (e.g., rules-based machine learning) may be used to evolve the rules 708 based on feedback 716 provided back into the system.

The knowledge engine 702 is a computing element used for applying the rules 708 to the sensor data 701, history data 704, and models 706 in order to make further deductions. Deductions can be in the form of derived information, results of computed models, or recommendations 712 to the user (e.g., actions the user should take based on the data and the application of the rules). The engine 702 operates iteratively until it cannot make any new deductions based on the inputs. At that point, the system will display its recommendations 712 to the user.

Recommendations 712 are the result of the knowledge engine 702 processes and can be in the form of a set of actions 714 and/or the answer to posed questions 710. Included in this output is the ability to explain to the user why the recommendations were made or the basis for the returned answer. The recommendations 712 may include multiple possibilities with associated confidence levels. Not every result will be binary as there is uncertainty in this system from the quality of the data to the probabilities assigned to certain deductions.

The system can be operable such that the user would then apply any recommended actions 714 and ultimately report the results back. This becomes feedback 716, 718 into the system that will either evolve the rules, the models or both. Positive feedback will reinforce deductions thus raising the confidence levels of those outcomes based on similar input in the future. Negative feedback has the opposite effect, reducing confidence levels. Only results above a threshold confidence level (configurable by the user) are shown, so once the confidence of a deduction is below that threshold, the user isn't even notified about it since the system basically has confidence that it is wrong or won't produce the desired outcomes. How the user provides this feedback is another aspect of this system 700.

The knowledge engine 702 is started by the user posing a question. The question can be in the form of applying a ruleset to the input data to see what recommendations come out. For example, it can be: apply the "Should I water?" ruleset and the system would determine whether (and for how long) watering is recommended. The user can also then ask, "Why should I water?" and the system will display the set of deductions and facts that led to that conclusion (or show why the question's premise was incorrect). The set of possible questions is constrained mostly through the rulesets that are available to address the question.

The following discusses details related to the representation and implementation of the various components described above. The term "facts" in this disclosure generally refer to data points that originate outside the system, such as from sensor readings like the zone sensor data, historical outcome data, turf condition sensor data, and other measured and derived data described above. These may be raw data points which have little meaning on their own. Facts can be represented as small tuples. The facts are saved to a fact store so that questions can be asked about both the present and the past (e.g., to compare to the present). Facts may have globally unique identifiers (e.g., fact store identifier, fact identifier). Facts may be considered immutable, e.g., once ingested, they should not change.

Because some facts originate from sensors and those sensors may actually report multiple readings at a time - as part of a single overall fact -facts may not simply be a scalar value associated with a name. Thus, while a fact could be such a binding, when coming from sensors, it will often be the name for a collection of values that were taken and recorded at the same time and place.

A fact may have any combination of the following attributes: 1) Timestamp: when was the data created or recorded; 2) Location: where was the data collected; 3) Fact name: a name given to this series of data points; 4) Fact type: the data type of this data point; 5) Value: the value of this particular fact; 6) Units of measure: the definite magnitude of a quantity (e.g., meters, degrees C, etc.); and 7) Confidence: a measure of the confidence in the accuracy of the value of this fact. Note that timestamp, location, Unit of Measure (UoM), and confidence are all optional.

The storage specification for facts includes a storage system that can efficiently handle storing and querying billions of facts. The storage system may include an efficient ingest system for facts originating from sensors sending real-time data (e.g., directly connected to the system). The fact retrieval system may implement certain aggregate functions (e.g., sum, average, count, etc.) to reduce the amount of data returned from the fact store to the knowledge engine.

If a fact includes a timestamp, the timestamp may include at least the year, month and day (the date) at which the fact came into existence (note that this is when the value for the fact was recorded, not the time at which it happened to be stored in a database). Optionally, the timestamp can also include an hour, minute, second, fractional second (the time) (where each of these parts can only be included if the parts preceding it in this list have also been included) and time zone. The time zone can be a computed attribute if necessary.

Interpreting facts based on time is as follows: if no timestamp is included, the fact is true at all times; if only the date part of a timestamp is included, the fact is true from 00:00:00.0000 to 23:59:59.9999 on that day; if only the date and hour are provided, then the fact is true only during that hour of that day; if only the date, hour and minute are provided, then the fact is true only during that minute of that hour of that day; if only the date, hour, minute, and second are provided, then the fact is true only during that second of that minute of that hour of that day; if the full time is given in the smallest increment of time measurement used in the system, the fact is true at that moment.

Through certain mathematical formulas, it is possible to interpolate new information from given facts. This is a matter of how the models want to interpret the raw facts. That is, even though a fact (e.g., a data reading) may be recorded at a particular minute does not mean it cannot be assumed that same value isn't true throughout that minute (e.g., temperature readings tend to move very slowly). When storing timestamp data, the various ways to filter data by this field should be considered. Queries will likely be for date ranges and thus the date part should be stored efficiently, perhaps separately from the time part, which can be optional and may often not be as important.

Given the variety of ways it is possible to identify locations, dealing with locations is a non-trivial aspect of the system. In one embodiment, every fact stored that is derived from a sensor has exact (GNSS) coordinates. However, when querying the system, exact coordinate matches are unlikely to be requested. Instead, the queries will tend to look for facts that are within some geographically bounded area of interest.

In FIG. 8, a diagram shows a location hierarchy according to an example embodiment. This is a way for users to filter the set of facts they want to apply to a ruleset (in addition to timestamps). The following describes the various levels from most precise (coordinates 800) to the least (hemisphere). Coordinates 800 are the GNSS coordinates of where a data reading was taken. This can be represented in LLH form, using the WGS84 geodetic reference. Each coordinate 800 can be in only one zone 801, with one exception (see zones).

A zone 801 is a user-defined, bounded geography and thus contains one or more coordinate points 800. The only rules for a zone 801 are that they do not overlap other zones and they fit into a single area. It is possible for two zones 801 to share a boundary. Thus, when searching for coordinates in a zone 801, it is possible that the same coordinates (and thus their corresponding facts) may appear in both result sets. This is the one exception to coordinates appearing in only one zone 801. As a practical example, a zone 801 might be a hexagonal perimeter around a sprinkler head.

An area 802 is a user-defined, geographically contiguous set of (one or more) zones.801. Thus, the boundary of an area 802 may encompass the outer perimeter of its zones 801. Areas 802 are provided as a way to more easily name a set of zones. Examples include "Hole 1 Fairway", "Hole 4 Green", and "Football Field 1." A site 803 is a set of areas 802. A job site's location can be identified by a street address, for example.

When available, a county 804 can be defined that contains the site 803. It can be computed from the address of a site. When available, a state 805 is a sub-part of a country 806. States 805 can represent states (e.g., in the United States), provinces (e.g., in Canada), or other state-like geographies within a country. Regions 806 are often subjective and generally describe a part of a country, e.g., the northeast region. These can be defined by us as a shortcut for a list of contiguous states within a country 807. The country 807 is the nation-state that contains the coordinates. This can be computed from the site address or the coordinates. The hemispheres 808 can be either northern or southern. When a country is in both, it can be either the generally accepted designation or where the majority of the landmass is located.

Given a coordinate, an address can be computed, and thus all the designations above it based on well-known and publicly accepted mappings. Note that the mapping of a coordinate to an address can be performed by a third-party service whose results accepted as fact (e.g., services like SmartyStreets^{™} or Google Maps^{™}). The area and zone in which a coordinate resides can be computed given the boundary of a zone and knowing what area contains that zone.

Note that a coordinate, the address, county, state, region, country and hemisphere may be considered immutable attributes of that coordinate. However, since zones and areas are user-defined, these could certainly change over time. Thus, these latter mappings may be dynamically computed on demand, e.g., based on parameters.

If a data reading does not include a coordinate but includes another location designator (e.g., zone, area, address, etc.), then a coordinate can be computed for the point that still satisfies the requirements for that point given the location designator. This can be done by computing the geographic center point for the given location and using that as the coordinate of the fact. Thus the fact will at least reside in the smallest location in the hierarchy, and all location values above it can still be accurately computed. Note that if a fact does not contain a location, then it is true for all locations.

One purpose of the location hierarchy as shown in FIG. 8 is to allow the user to filter or localize any recommendations made by the knowledge engine. For example, the user may ask "What areas of the sports complex shall I water today?" where the sports complex refers to a site and thus all the areas and zones within that site. In this case, the fact set would include all facts that fall within that location (e.g., with coordinates within the zones and areas included in the site definition). A more specific question could be whether to water the first green. This would narrow the set of facts to just that green.

It is not just the user that may need to specify a location designator - the models may want to do this as well. For example, a model might need to understand data readings in zones contiguous to the target zone it is currently considering. Or it might want to understand the weather pattern in the county, state or region. The point is that location filters will usually be above a coordinate value and thus the fact store should be able to efficiently map facts given a coordinate to the appropriate location designator.

A fact name is the name of a series (or class) of facts. It should be something human readable and understandable as these are the names that would appear in inputs to the knowledge engine and the models. Fact names should be globally unique, so longer names will be desirable to ensure both uniqueness and specificity of the associated values. For example, a name of "temperature" is not specific enough as this can refer to many different temperature types. But a name like "outside-air-temperature" is more specific and can be used in all rules and models with a singular meaning.

Names are declared as part of setting up the system to read data from sensors and other sources. It is during this process that the system can enforce the global uniqueness property. Also, the system can provide the already declared names (including their types and units of measure) to help the user re-use existing fact declarations. The user interface should provide smart auto complete and suggestion features here to help the user find the right fact when it already exists or make it easy to define a new one.

In order for the system to properly interpret a raw set of bits into a meaningful value, understanding its type tells how to interpret the bits. As mentioned previously, a fact can be either a single scalar value (a number or a string of text) or it can be a set of named values (e.g., a set of name-value bindings). Thus, an example fact types are: Boolean: a value of either true or false; Bit: a value of either 0 or 1, but will be interpreted as Boolean; Integer (a signed integral value); Real (a signed floating-point number of any precision); Text (a sequence of UTF8 characters); Image (a two-dimensional array of pixel values); Set of mappings (a list of *sub-fact-name=value* pairs where *value* is one of the above scalar types)

The majority of fact values will be one of the numeric types or a set of mappings (especially when originating from devices or sensors that record multiple values per reading). The value part of a fact can be interpreted based on its fact type. These values are used directly in rules and in models. Note that the set-of-mappings can be any type, and can stored in whatever way is optimal in the fact store. When being passed to models, it is useful to implement an API to pull a mapped value from the fact. This could be directly via language syntax (e.g., Python's dictionary selection syntax) or via a callable function provided in the API.

While the fact type is a way for the computer to interpret the bits a certain way, the units of measure is a way for a human to interpret the converted value. For example, a value of 32 is meaningless on its own. Even if the fact name is "temperature" this does not precisely define what 32 represents. Therefore, the UoM is provided to make is clear what the value really means, for example, "degrees-F". This information can be used in rules and models to ensure there is no confusion as to the true meaning of a value. UoM is an optional attribute, but if a rule or model is checking for this value, it may reject this fact if it cannot confidently make a determination.

Units of measure can be defined as enumerated values to ensure there is no confusion when comparing them between different facts. For example, there can be a single UoM for "degrees Fahrenheit". As many of these as possible can be predefined, users can add their own units and a UI that tries to prevent duplicates (while also helping find an appropriate, previously defined enumeration). When the fact's type is a set of mappings, then the UoM field is a set of mappings of the same *sub-fact-name* used in the value mapped to the UoM enumerated value for that sub-fact. Thus, the UoM for each part of a mapping can be determined. If no mapping is provided, then no UoM is associated with that sub-fact.

Note that a fact need not be considered an absolute truth in this system. For example, the reading can be associated with some margin of error which can be propagated while using the fact in other computations. For example, a thermometer may take a reading every hour with a precision of tenths of degrees. For all many purposes, this may be more than sufficient, assuming the thermometer is of the requisite quality. Therefore, a confidence of 1.0 (the highest) could be associated with this reading. Wind speed readings may also be taken every hour from an anemometer, but it may not be of high quality and thus not very accurate. In this case, a confidence of 0.9 may be assigned to those readings. Note that this is not a strict measure of the error but can be loosely interpreted as being 90% confident that the reading is accurate.

For the most part, the system may assume that sensor readings have a 100% (1.0) confidence in terms of their readings. The complexity of the recommendations for users will "multiply" and the confidence will be reduced the more the accuracy of the raw facts is questioned. So, the non-1.0 confidences should be applied judiciously (e.g., by default, sensor facts start at 1.0 until a user makes a change).

As currently specified, the confidence is a property that can be applied to each individual fact in a series. Practically speaking, this would be an attribute assigned to a specific sensor (or class of sensors). This means the sensor definitions are augmented to include a confidence value that can be set by the user who defines the sensor in the system. And then when a value is read from that sensor, each created fact would be assigned the corresponding confidence value. Confidences are applied to an entire fact without regard to whether it represents sub-facts. So the confidence of a fact is the confidence of each sub-fact if this fact represents a mapping type.

The system should understand the format of each part of a fact in order to efficiently and properly process it. For each class of fact, there can be any number of facts (e.g., instances) associated with it (e.g., a temperature reading every hour at every golf course). But the descriptor for those facts is tied to the fact declaration and thus it only needs to be declared one time to the system. Therefore, a fact declaration system allows users to declare the attributes of the fact in addition to tying them to the ingest process where the raw bytes are read and interpreted from sensors. It is also here where rules can be set up for facts that are missing attributes or whose attributes are not the default meaning. For example, if a location is missing, it may be computed in a different way.

A model 706 may include a formula and/or algorithm. The model takes a set of facts, deductions and initial conditions as inputs and produces one or more new deductions as outputs. The deductions are new information in the form of *deduction-name=value* statements (tuples). This new information is inserted into the working memory and can then be used as input to other models or to evaluate rules.

Models 706 are evaluated at two points during the process of resolving a user's question - before the engine begins to evaluate rules and as part of a consequent to a fired rule. A model will be declared before it can be used. A model's declaration has the following parts: the name of the model; the expected inputs to the model; the expected outputs from the model; and the formula that defines how the inputs are transformed to the outputs (the body).

The name of the model should be globally unique. Since the models should be shareable across customers, a naming convention based on company names may be used. Models can be organized into hierarchies by separating names with the period (.) character. The "root" of the name is the name of the organization that defined and model, e.g., [*organization*].[*package*.]*model-name* where *package* is an optional package grouping name (e.g., watering) and *model-name* is the name of the model. The inputs to a model 706 will help drive the filtering of facts and working memory to ensure that the model is getting the data it needs. Thus, input declarations are little more involved than for a standard computer programming language function call. An input can be the name of a fact series and any variable in working memory (e.g., deductions and initial conditions). When specifying a fact series, the model can also provide additional filters to limit the amount of data that it will receive. For example, facts in a series can be filtered by location (e.g., all facts within the area encompassing the initial zone), time (e.g., all facts within the past week), and value range (e.g., facts within a numeric range). Note that location and time can be defined to be constrained by the initial condition values or can be absolute (e.g., without regard to the initial condition values). The latter is potentially dangerous as it could lead to millions of facts being considered by the model, perhaps unintentionally.

Every model may automatically have access to everything in working memory via an implicit working memory object that is passed into the model (in a language appropriate way). However, the model could declare what deductions it will read as part of the model's input declarations, which may include a list of deduction names. Declaring these helps the system ensure that the deduction variables are available and prompts the user as needed. Only the facts that are to be operated on need be declared. A parameter is a specification of a set of values that will be passed into and thus can be used by the model. This set of values is bound to a name (*parameter-name*) that is used within the model to refer to this set of values. When a model is about to be activated, the system will first gather all the data for the inputs per each parameter's specification and assign the result to the parameter name. The inputs come from the fact store or can come from working memory (via the implicit working memory object that is available in every model body).

Gathering of facts from the store results in either a single value (if an aggregate function is specified) or a list of data. In the latter case, the data can be single values (one per matched fact) or it can be tuples that include - in addition to the value - other attributes of each matching fact (location, timestamp, confidence, UoM). Note that, in this context, a value can be a set of mappings, e.g., the sub-facts of a fact. A list of single values is returned when the *only values* clause is specified (e.g., (e.g., **fact** *x* **only values**), otherwise a list of tuples is returned. When an aggregate function is specified, the *only values* clause is ignored if present (since a single scalar value will be assigned). If a *limit* clause is given (e.g., **fact** *x* **limit** *number), number* is the number of matching facts to return. If ordering is applied, this would limit the results to the first *number* of the ordered facts. Otherwise, it just limits the number of returned facts with no guarantees as to which facts are assigned from the larger set of matching facts.

To ensure that the model is operating on the expected units of measure (UoM), it can be included in the parameter specification. When present, any matching facts whose UoM is different than the model specified UoM will have their values automatically converted according to built-in conversion formulas. If no such conversion formula is available, then the fact is discarded. If the type of a fact is a set of mappings, then the units can include the UoM mapping for each sub-fact in the fact or specified in the computation.

A fact name can be either the name of a fact series or, in the case a fact has sub-facts, it can be the parent fact followed by the sub-fact name (e.g., weather-station.air-temperature and weather-station.humidity are examples of sub-fact selectors). When a sub-fact selector is used, the system treats these as single valued facts and thus much of this section can be applied as expected (e.g., a unit of measure conversion would be applied to just this sub-fact). However, if a fact is requested that is actually a set of mappings, then the following restrictions are in place: only the count aggregate function can be applied to such a fact; the fact cannot be filtered by a range specification.

If both an aggregate function and the *limit* clause are given, the *limit* clause is applied first and then the aggregate function operates on the limited data set. This allows one to, for example, get the average of the 10 most recent temperature readings.

Other input parameter modifiers can be used to filter the set of possible facts that could be sent to the model. The location of facts can be constrained by telling the system to use the initial condition location input as a starting reference location and then optionally expanding the geographical radius to include facts from the current location out to (and including) the surrounding location given by a designation. For example, assume that the current location (as given by the initial condition input) is a zone. Using the optional inclusion modifier that specifies to go out to the site designator then this would include all facts that are within the initial zone, plus all zones from all areas associated with the job site.

It may also be useful to be able to give an absolute location if facts are needed from a location independent of the current location (e.g., good for benchmarking against a well-known set of facts). In this case, an absolute location value is given. Note that since simple location names are not unique, all the surrounding parts of the location are supplied to get to a unique location. For example, to name a county: county( "Boulder" ) in state( "Colorado" ) in country( "USA" ).

Notice that only designators are included to make the left-most designation unique (the country designator could be left out assuming there are no other states called "Colorado" in other countries.

In addition to filtering by location, time can be used to filter. There are a number of ways to designate a time span, e.g., as a starting and/or ending time, newest, etc. The resulting values or tuples can then be ordered based on each matching fact's timestamp. They can be ordered either oldest fact to newest fact or from newest fact to oldest fact. If no ordering of facts is requested, then the system makes no guarantees about the ordering of the resulting values (the model body can look at the timestamp of each fact if this information is needed). If no timespan is specified, then it defaults to the single fact that is the last (e.g., most recent) fact available.

The set of matching facts can further be constrained by providing a range for the values of the facts of interest. The ranges may include upper, lower, equals bounds, the bounds being a text or number value. Values of candidate facts are compared with the range to make sure they comply before being included in the result set.

When the type of the fact value is a number, then the bounds will also be numbers. The units for the bounds are assumed to match the UoM given in the model. If a conversation is needed, they conversation takes place before determining if the value of the fact is in the specified range. If no UoM is given in the model definition, then range comparisons are made without regard to the units. If the type of the fact value is text, then the default sort order for the character set of the text will be used to determine if a value is above or below a specified bound. If the fact type is Boolean (or bit), then below and above ranges are ignored (but you can still filter based equality to find only facts that are true or false).

Here are some examples of input parameters: "degs is fact outside-temp in degrees-F above 32 inclusive from current to area during previous 2 months." This input gets the set of facts named outside-temp from the locations enclosed by the current area that were recorded over the previous two months and have a value of at least 32 and return them in degree Fahrenheit units. Result is assigned to the name "degs" to be used inside of the model body. This is another example set of input parameters: "level is fact average(battery-level) in volts during previous 1 weeks for 1 days." This computes a battery level (assigned to level) as the average recorded battery level from all devices at the current location on the day one week ago.

One purpose of a model is to compute new results by evaluating a formula against the input parameters, which can produce one or more deductions. These deductions are then placed into working memory which can then be used in rules or as inputs to other models. A deduction has a name (using the same parameter-name syntax) and an optional value. When a deduction has no value, it represents a Boolean value - if it is present in working memory, it is logically true while its absence is logically false. When a value is given, this is either a simple scalar value (the same types as for facts) or it can be a fact tuple (e.g., all the attributes of a single fact).

By declaring the outputs as part of the model definition, the system can provide appropriate support within the body of the model definition for assignment of these one or more resulting deductions. Once a model exits, the computed deductions are added to the working memory. If a deduction was already in working memory, the old value is replaced by the new value. It is also possible for a model to remove a deduction from working memory (useful for Boolean deductions). Well-designed models work independently in that they alter working memory in non-conflicting ways. This allows models to be executed in parallel when available. The body of a model is intended to be functional code with no side effects. That is, it takes its inputs, performs computations on these inputs and then assigns any results into the declared deduction variables. The idea is that this code can be written in a number of supported programming languages (e.g., Python, R, etc.). Therefore, the system need not parse the implementation of a model - the model can be passed on to an appropriate language interpreter along with the inputs. A language-specific API can be provided that is used to both access the input parameters (when they can't be made available using the language's natural mechanisms) and write out the final deductions.

The knowledge engine evaluates *rules* 708. Rules 708 give the system the ability to infer new deductions (and add them to working memory), derive actions to be performed by the user, evaluate models based on derived deductions, ask questions when data is missing, provide reasons as to why certain deductions were made, etc. In order to get to certain goals or recommendations, rules are grouped into *rulesets.* A ruleset is a named set of rules needed to answer a question or make a certain recommendation. When starting the engine, the user will specify a particular ruleset to use. There can be any number of rulesets available. The fewer the rules in a ruleset, the narrower the search space, which also leads to much faster conclusions. Large rulesets can become complicated to understand and can take exponentially longer to get to a conclusion.

Rules are meant to be understood and therefore represented in a simple manner, e.g., **if** *antecedent* **then** *consequent.* The antecedent is a Boolean expression. It is used to compare values in working memory, determine if deductions have been made (by their presence in working memory), or some combination of these. Antecedents are not meant to be complicated expressions although the syntax allows for an arbitrary number of phrases. The antecedent and consequent may be associated with confidence estimates, and the rule may be associated with a priority order (e.g., integer value).

If an antecedent phrase is just the name of a deduction (or, in this case, the name of an added action), it evaluates to true if the deduction appears in the working memory (regardless of whether it also has a value assigned). Otherwise, deductions - which can be thought of like programming variables - can be compared with both literal values and other deductions. The "in" comparator is specific to determining if a deduction containing a location is encompassed within a particular location. The "in" comparator uses the location hierarchy shown in FIG. 7 to determine truth.

If a confidence is given, this acts as a minimum confidence that the antecedent will reach (inclusive) to be considered true. That is, the antecedent will evaluate to *both* true and have its computed confidence be at or above the minimum confidence given. If it is not given, then this behaves as if with confidence 1.0 were specified (e.g., with 100% confidence).

When the antecedent evaluates to true, it is said to be *triggered.* There may be any number of rules that are triggered in a given iteration of the engine. Priorities are used to determine which triggered rule is actually fired in a given iteration. The first tie breaker is rule specificity - when one antecedent is narrower than another, then the narrower rule wins. This allows the user to create "default" rules which would only get fired when no other more specific rule is available. The second tie breaker is just priority ordering. That is, the remaining rule with the lowest numbered priority order is the one that will fire (so rule with priority order 1 is the highest priority rule). Each rule in a ruleset can have a unique priority order value (but they do not need to be consecutive). The user interface is meant to hide most of this complexity. Users can just drag rules around to put them in order. The system should be able to group rules that will be evaluated based on specificity. The rule that is fired has its consequent evaluated. The consequent can do one or more of the following: add a deduction to working memory (including assigning it a value); evaluate a model (which itself can add new deductions to working memory); and add an action to working memory. Additionally, when adding a deduction to the working memory, a confidence can be assigned to it. If the optional *with confidence* clause is present, then the confidence of the antecedent is multiplied by the new confidence number given and is applied to each new deduction in the consequent.

A deduction or an action can be assigned a confidence. This can be a constant value, or it can be an attenuation of the confidence of the antecedent (called the input here). If the *with confidence* clause is attached to a particular consequent, then it takes precedence over a *with confidence* clause that might have been included as part of the then clause.

Because some rulesets may be shared, a mechanism is provided to group rulesets into larger ruleset groups. This allows the user to create certain rules once in the system and then re-use them in various other contexts. Note that any models these shared rules refer to will also be available to the users of any rulesets in which these shared rules are encompassed. When composing rulesets, the system should check any access control rules on models to ensure accessibility.

When a user poses a question or asks for recommendations, the system takes the following steps: prepares the execution environment; runs the engine; and presents the results. The results are the set of actions and other deductions made while running the engine. A deduction is logically the result of firing a rule or an output from running a model. The deduction is something new learned based on the initial facts along with any previous deductions made up to that point. The system itself doesn't necessarily understand a deduction - it is some human-readable set of symbols that were produced as a result of running the engine. Hence, in its most basic form, a deduction is a symbol (e.g., a text snippet) that would be understandable to a user of the system.

A deduction can be parameterized. That is, in addition to its symbol, it may have an associated value that was computed as part of the deduction. Actions are also deductions. An action can be distinguished from a basic deduction in that the actions are usually what the system is recommending to the user in terms of actions to take. Non-action deductions are just new pieces of knowledge that the system derived, but do not necessarily lead to any actions. By distinguishing actions as a special form of deduction, the UI has an opportunity to make this information more accessible to users. Additionally, the result of an applied action can be tracked later, so it will be useful to know what actions were recommended, which were taken, to what extent they were followed (if it is not binary), and the results thereof.

Finally, a deduction can have an associated confidence level. The confidence is computed as rules are fired and as models are evaluated. Deductions below a certain confidence threshold (which can be configured by the user) would not be shown to the user, but it may be helpful to allow the user to dynamically adjust that threshold if the user would like to see other deductions even if they are with lower confidence levels. It is even possible for a user to follow a lower confidence action and report back the results which could raise the confidence of that deduction in the future - assuming the result of the action turned out well.

Taking all of this into account, a deduction has the following attributes: deduction name (the human-readable name given to this deduction); deduction value, (an optional quantity associated with this deduction); and meta-data. The meta-data can include: confidence level (if not explicitly given, then defaults to 1.0); action flag (indicates if this deduction is a special action deduction); a unit of measure (optional); and origin of deduction (how the deduction was added to working memory). Possible options for origin are: initial condition; rule (the rule id is provided); model (the model's name is provided);.

Working memory (WM) includes the set of initial conditions and initial facts plus any new deductions learned as a result of executing the engine and running models. It is an ordered list of such deductions with new deductions being added to the front of the list. In this way, rules and models will always find the most recent deduction (when multiple deductions with the same name are deduced) by scanning the working memory starting at the front. The WM can be envisioned as a list of *deduction-name* or *deduction-name=value* pairs (note that any associated confidence is included in the meta-data associated with each entry).

Before the knowledge engine is run, the working memory is set up. This involves first getting the question from the user that will be resolved, looking up the associated ruleset appropriate for the question, finding any supporting facts, and then generating any new information from our models. Posing a "question" and asking for "recommendations" works in the same way: by choosing a ruleset to evaluate. If the user just wants to see what the system deduces based on the rules and current facts, the engine is run "forward". This means evaluating the rules against working memory, deriving new deductions, and iterating until no more deductions can be made. What was learned, e.g., the final contents of working memory, is then reported to the user.

If the user wants to determine whether a particular deduction would be derived, then the user would select the particular deduction of interest from the list of possible deductions that could be derived from this ruleset. The engine will then run "backwards" from the deduction to determine if all conditions that would lead to this deduction are present and true (above a confidence level). The system then reports whether the deduction is supported or not by the facts (and models) and how the result was substantiated.

Difficulties may be encountered when running backwards in the face of models. The inputs to the models may not be known since the engine is going in the "wrong" direction. Models that only operate on facts independent of anything derived should be fine, but not others. One possible solution is to assume models generate deductions (which are declared) with full confidence and treat the model as a no-op. Then, when encountering the beginning of the trace, go forwards again with the assumed to be correct starting facts to see if the original deduction is obtained.

The next step is for the user to enter any initial constraints or other facts that would be inserted into working memory. The two most common are location (recommended to be entered) and time span. The location would be one of the designators from FIG. 8. This is meant to be the location about which the question is meant to be answered. For example, it could be answering the question: should we water the hole 2 fairway? This would be a named area designator. The designator would be given in *absolute-location* syntax. This would limit any facts applied to the rules and models.

The time span is more optional and really depends on what the user wants to do. If the user wants to compare historical outcomes, then the time span can be used to set that window. If given, then only facts that are within the given timespan will be considered. Otherwise, the models are free to limit facts based on time as they see fit. For example, if the user wants to know about watering *now,* then the models would use "now" as the starting point and work from there. Within working memory, these initial conditions are specified as initial-location and initial-timespan.

Any additional deduction variables can be set at this time as well. These may include asserted facts that should also be considered. However, these are treated differently from the model perspective. Models have access to all the working memory variables, but a factual deduction is not treated the same as a fact from the fact store in terms of input to the models. But once in a model, the model can certainly treat them the same.

As an example, the user might assert that the current temperature is 57F degrees. This could be specified as: current-outside-air-temperature=57 (UoM=degrees-F, confidence=1.0). Rules can use this deduction directly. Models can also pull this information from the working memory object that is passed in. But if the model is requesting outside air temperature facts, they would be gathered from the fact store, filtered and passed into the model via an input parameter. In addition to the location and timespan initial conditions, the range of possible deductions that can be initially set is limited by the deductions declared in the rulesets. This can be further limited to deductions that appear in antecedents or are needed in models.

Once the ruleset, initial conditions and deductions are established, the user can also decide to generate some initial deductions by running models directly. This would be like firing a rule whose antecedent was simply true. The user may choose to run one or more models before starting the knowledge engine. It is even possible to use an empty ruleset if the user just wants to compute values based on inputs, facts and the models without any further deductions being generated. At this point, the system may not be acting as an expert system, just an analytics engine.

Running initial models is a matter of listing the model names to run in the order the user wants to run them. The system could be configured to analyze the inputs and outputs of the models to determine if some of the models can be run in parallel with each other to minimize startup time. Initially, the models can be run sequentially in the order given.

At this point, the working memory is initialized with initial conditions and the outputs from any startup models that have been run. If the chosen ruleset is not empty, then the engine starts based on the type of question being asked. If the user is looking for deductions and recommendations, the engine is run forward, otherwise backwards. In either case, the engine will track what rules are triggered, what rules are fired and what models are run. This allows the user to understand how a deduction was arrived at.

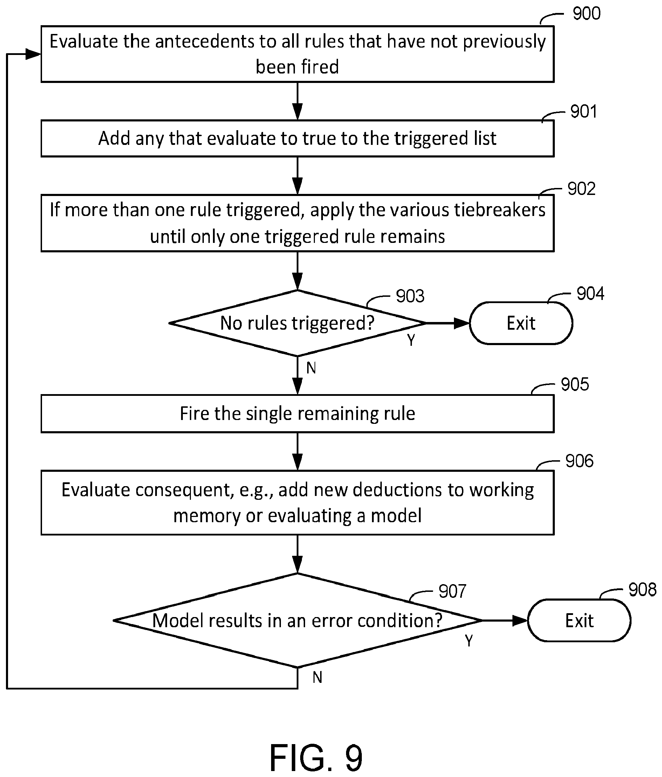

In FIG. 9, a flowchart shows an example of how the knowledge engine may operate when running forward. The knowledge engine first evaluates 900 antecedents to all rules that have not previously been fired. Any rules that evaluate to true are added 901 to the triggered list. If more than one rule triggered, the various tiebreakers are applied 902 until only one triggered rule remains. If no rules triggered (as indicated at block 903), then the engine exits 904. Otherwise, the single remaining rule is fired 905, which evaluates 906 the consequent. The consequent can be any number of steps including adding new deductions to working memory or evaluating a model. If a model results in an error condition (as indicated at block 907), the engine exits 908, otherwise the process repeats with block 900.

At this point, the working memory has all the newly learned knowledge in the form of deductions. These would then be presented to the user, e.g., as a recommended action based on all the currently available inputs. The layout will be the work of the user interface, and the initial inputs should be separated from the generated deductions. Only those deductions that are above the user's desired threshold should be shown to minimize clutter. Actions should be called out separately from just new knowledge. The entire resulting data package could be saved for the user for historical review and entering feedback in the event actions were recommended.

One feature of the system is that it allows an expert user to provide feedback. That is, the system makes a recommended action, and can receive information as to whether this had a positive or a negative effect so that reinforce the learning can be reinforced in either direction. The user could provide feedback by referring back to a previous named output and then, for each action, telling the system the result. Initially, this will be a value from 0.0 to 1.0 rating the success of the action (and thus how confident the system should be in producing it in the future based on the same inputs).

Thus, various embodiments of managing turf in a work region are disclosed. The following section below includes a non-exhaustive list of some aspects of the embodiments described above.

Embodiment 1 is a method of managing turf in a work region, the method comprises: monitoring multiple sets of zone sensor data, each set associated with a different zone of a plurality of zones dividing the work region; providing a set of zone sensor data as an input to a predictive turf model for each zone; determining an estimated turf condition for each zone based on an output of the predictive turf model for each zone; and generating a recommended action for each zone based on the associated estimated turf condition for each zone.

Embodiment 2 includes the method of embodiment 1, wherein the predictive turf model is calibrated based on historical outcome data and historical sensor data of the work region. Embodiment 3 includes the method as in any of embodiments 1-2, further comprising updating the predictive turf model in response to the zone sensor data and a measured turf condition. Embodiment 4 includes the model of embodiment 3, wherein updating the predictive turf model comprises: measuring the measured turf condition for at least one zone of the plurality of zones; and comparing the estimated turf condition and the measured turf condition for the at least one zone. Embodiment 5 includes the method of embodiment 4, wherein measuring the measured turf condition comprises inputting measured turf condition based on observed turf condition at the at least one zone of the plurality of zones. Embodiment 6 includes the method of embodiment 4, wherein the measured turf condition is measured by one or more turf condition sensors. Embodiment 7 includes the method of embodiment 6, wherein the one or more turf condition sensors comprise a light reflectance sensor.

Embodiment 8 includes the method as in any preceding embodiment, further comprising determining a subsequent estimated turf condition for each zone based on an output of the updated predictive turf model for each zone and generating a subsequent recommended action for each zone based on the associated subsequent estimated turf condition for each zone. Embodiment 9 includes the method as in any preceding embodiment, wherein monitoring multiple sets of zone sensor data comprises: collecting the sets of zone sensor data for the associated zone from at least one of connected equipment, user inputs, and sensor nodes; transmitting the sets of zone sensor data to a network; and verifying the sets of zone sensor data collected.

Embodiment 10 includes the method as in any preceding embodiment, wherein the sets of zone sensor data associated with a zone comprise information pertaining to previous action taken to manage conditions at the associated zone. Embodiment 11 includes the method as in any preceding embodiment, wherein the sets of zone sensor data associated with a zone comprise environmental conditions and trends. Embodiment 12 includes the method as in any preceding embodiment, further comprising displaying the recommended action for each zone to a user. Embodiment 13 includes the method as in any preceding embodiment, further comprising providing a command to equipment to carry out the recommended action for each zone. Embodiment 14 includes the method as in any preceding embodiment, further comprising recording and transmitting the recommended action for each zone to a network. Embodiment 15 includes the method as in any preceding embodiment, wherein the estimated turf condition for each zone comprises percentage, amount, probability, dimension, rate, etc.

Embodiment 15A includes method as in any preceding claim, wherein generating the recommended action comprises: forming a ruleset comprising a set of rules ordered by priority, the rules producing deductions as outputs; forming one or more models that take the zone sensor data, the deductions, and initial conditions as inputs and provide new deductions as output; and executing the ruleset and models via a knowledge engine to determine the recommended action. Embodiment 15B includes the method of embodiment 15A, further comprising displaying the ruleset to a user to explain why the recommended action was selected. Embodiment 15C includes the method of embodiments 15A or 15B, wherein the recommended action comprises multiple possibilities with associated confidence levels.

Embodiment 15D includes the method of embodiments 15A-15C, wherein the knowledge engine receives feedback, the feedback used evolve at least one of the set of rules and the one or more models. Embodiment 15E includes the method of embodiments 15A-15D, wherein the zone sensor data is associated with a confidence value, and wherein the confidence value is used to determine an associated confidence value for the deductions.

Embodiment 16 is a method of managing turf in a work region, the method comprising: providing an estimated turf condition for each zone of a plurality of zones dividing the work region; generating a recommended action for each zone based on the associated estimated turf condition for each zone as an input to a suggestion model; providing a command to equipment to carry out the recommended action to manage the turf in the associated zone; measuring a turf condition in response to the action carried out to manage the turf in the associated zone; and updating the suggestion model in response to the measured turf condition and a desired turf condition based on the action carried out to manage the turf.

Embodiment 17 includes the method of embodiment 16, further comprising recording and transmitting action carried out to a network. Embodiment 18 includes the method as in any of embodiments 16-17, wherein providing a command to equipment to carry out the recommended action comprises automatically commanding connected equipment to carry out the recommended action to manage the turf in the associated zone. Embodiment 19 includes the method as in any of embodiments 16-18, further comprises displaying the recommended action for each zone to a user. Embodiment 20 includes the method as in any of embodiments 16-19, wherein measuring the turf condition comprises collecting data from at least one of one or more sensors, observation, and feedback.

Embodiment 21 is a system for managing turf in a work region, the system comprising: a plurality of zones dividing the work region; one or more sensors associated with a different zone of the plurality of zones, wherein the one or more sensors are configured to collect sets of zone sensor data for the associated zone; a controller configured to monitor multiple sets of zone sensor data from the one or more sensors and determine an estimated turf condition for each zone based on an output of a predictive turf model for each zone, wherein the controller is further configured to generate a recommended action for each zone based on the associated estimated turf condition for each zone.

Embodiment 22 includes the system of embodiment 21, further comprising turf maintenance equipment configured to take an action to manage the turf in the associated zone based on the recommended action. Embodiment 23 includes the system as in any of embodiments 21-22, wherein the predictive turf model is configured to be calibrated based on historical outcome data and historical sensor data of the work region.

Embodiment 24 includes the system as in any of embodiments 21-23, wherein the predictive turf model is configured to be updated in response to the zone sensor data and a measured turf condition. Embodiment 25 includes the system as in any of embodiments 21-24, further comprising a network, wherein the controller is configured to record and transmit the recommended action for each zone to the network.

Although reference is made herein to the accompanying set of drawings that form part of this disclosure, one of at least ordinary skill in the art will appreciate that various adaptations and modifications of the embodiments described herein are within, or do not depart from, the scope of this disclosure. For example, aspects of the embodiments described herein may be combined in a variety of ways with each other. Therefore, it is to be understood that, within the scope of the appended claims, the claimed invention may be practiced other than as explicitly described herein.

All scientific and technical terms used herein have meanings commonly used in the art unless otherwise specified. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims may be understood as being modified either by the term "exactly" or "about." Accordingly, unless indicated to the contrary, the numerical parameters set forth in the foregoing specification and attached claims are approximations that can vary depending upon the desired properties sought to be obtained by those skilled in the art utilizing the teachings disclosed herein or, for example, within typical ranges of experimental error.

The terms "coupled" or "connected" refer to elements being attached to each other either directly (in direct contact with each other) or indirectly (having one or more elements between and attaching the two elements). Either term may be replaced to "couplable" or "connectable" to describe that the elements are configured to be coupled or connected. In addition, either term may be modified by "operatively" and "operably," which may be used interchangeably, to describe that the coupling or connection is configured to allow the components to interact to carry out functionality.

As used herein, the term "configured to" may be used interchangeably with the terms "adapted to" or "structured to" unless the content of this disclosure clearly dictates otherwise.

The phrases "at least one of," "comprises at least one of," and "one or more of" followed by a list refers to any one of the items in the list and any combination of two or more items in the list.

As used herein, "have," "having," "include," "including," "comprise," "comprising" or the like are used in their open-ended sense, and generally mean "including, but not limited to." It will be understood that "consisting essentially of," "consisting of," and the like are subsumed in "comprising," and the like. Further, "a," "an," "the," "at least one," and "one or more" are used interchangeably herein.

In general, the terms "aspect" and "embodiment" may be used interchangeably to describe one or more examples of the present disclosure. Reference to "one embodiment," "an embodiment," "certain embodiments," or "some embodiments," etc., means that a particular feature, configuration, composition, or characteristic described in connection with the embodiment (or aspect) is included in at least one embodiment of the disclosure. Thus, the appearances of such phrases in various places throughout are not necessarily referring to the same embodiment of the disclosure. Furthermore, the particular features, configurations, compositions, or characteristics may be combined in any suitable manner in one or more embodiments.

## Claims

1. A method of managing turf in a work region (102), the method being **characterized by**:
providing an estimated turf condition (210) for each zone (104) of a plurality of zones dividing the work region, each zone being sized and shaped to capture homogeneous environmental conditions in the same zone;
generating a recommended action (220) for each zone based on the associated estimated turf condition for each zone as an input to a suggestion model (145);
providing a command to equipment to carry out the recommended action to manage the turf in the associated zone;
measuring a turf condition (230) in response to the action carried out to manage the turf in the associated zone; and
updating the suggestion model in response to the measured turf condition and a desired turf condition (240) based on the action carried out to manage the turf.

2. The method of claim 1, further comprising recording and transmitting action carried out to a network.

3. The method as in any of claims 1-2, wherein providing a command to carry out the recommended action comprises automatically commanding connected equipment to carry out the recommended action (220) to manage the turf in the associated zone (104).

4. The method as in any of claims 1-3, wherein providing a command to carry out the recommended action (220) comprises displaying the recommended action for the associated zone (104) to a user.

5. The method of claim 4, wherein providing a command to carry out the recommended action (220) further comprises the user providing a command to equipment to carry out the recommended action to manage the turf in the associated zone (104).

6. The method as in any of claims 4-5, wherein providing a command to carry out the recommended action (220) further comprises the user manually carrying out the recommended action to manage the turf in the associated zone (104).

7. The method as in any of claims 3-6, wherein the presence of connected equipment is queried to determine whether the recommended action (220) is displayed to the user or sent to the connected equipment.

8. The method as in any of claims 1-7, wherein the recommended action (220) to manage the turf in the associated zone (104) comprises at least one of: irrigation, aeration, fumigation, fertilization, cultivation, mowing, chemical application, blowing, and rolling.

9. The method as in any of claims 1-8, wherein when the associated estimated turf condition (210) for said zone (104) is within a certain set of operating parameters, the recommended action (220) to manage the turf in the associated zone is no action.

10. The method as in any of claims 1-9, wherein measuring the turf condition (230) comprises collecting data from at least one of one or more sensors, observation, and feedback.

11. The method of claim 10, wherein the one or more sensors includes at least one of: light reflectance sensors, digital image analysis, surface hardness sensor, penetrometer, or moisture sensor.

12. The method as in any of claims 10-11, wherein observation includes at least one of: visual assessments of turf quality, disease incidence, weed encroachment, pest infestation, or other qualitive or quantitative measures of turf conditions or stress response.

13. The method as in any of claims 10-12, wherein feedback includes at least one of: assessment of quality, playability, surface conditions, resident reports, user comments, other input from observers and users regarding usability and perception, or other qualitive or quantitative measures of comparison to a desired turf condition (240).

14. The method as in any of claims 1-13, wherein the estimated turf condition (230) for each zone (104) is determined by a predictive turf model (140).

15. The method as in any of claims 1-14, wherein each zone (104) is defined by a single node (110) providing a representation of a micro-climate of the respective zone.

## Patentansprüche

1. Verfahren zum Verwalten von Rasenflächen in einem Arbeitsbereich (102), wobei das Verfahren **gekennzeichnet ist durch**:
Bereitstellen eines geschätzten Rasenzustands (210) für jede Zone (104) einer Mehrzahl von Zonen, die den Arbeitsbereich unterteilen, wobei jede Zone dimensioniert und geformt ist, um homogene Umgebungsbedingungen in derselben Zone aufzunehmen;
Erzeugen einer empfohlenen Maßnahme (220) für jede Zone auf Grundlage des zugeordneten geschätzten Rasenzustands für jede Zone als eine Eingabe für ein Vorschlagsmodell (145);
Bereitstellen eines Befehls an Geräte, um die empfohlene Maßnahme für die Pflege des Rasens in der zugeordneten Zone auszuführen;
Messen eines Rasenzustands (230) als Reaktion auf die durchgeführte Maßnahme für die Pflege des Rasens in der zugeordneten Zone; und
Aktualisieren des Vorschlagsmodells als Reaktion auf den gemessenen Rasenzustand und eines gewünschten Rasenzustands (240) auf Grundlage der durchgeführten Maßnahme für die Pflege des Rasens.

2. Verfahren nach Anspruch 1, das ferner das Aufzeichnen und Übertragen der ausgeführten Maßnahme an ein Netzwerk umfasst.

3. Verfahren nach einem der Ansprüche 1-2, wobei das Bereitstellen eines Befehls für die Ausführung der empfohlenen Maßnahme das automatische Befehlen des verbundenen Geräts für die Ausführung der empfohlenen Maßnahme (220) für die Pflege des Rasens in der zugeordneten Zone (104) umfasst.

4. Verfahren nach einem der Ansprüche 1-3, wobei das Bereitstellen eines Befehls für die Ausführung der empfohlenen Maßnahme (220) das Anzeigen der empfohlenen Maßnahme für die zugeordnete Zone (104) für einen Benutzer umfasst.

5. Verfahren nach Anspruch 4, wobei das Bereitstellen eines Befehls für die Ausführung der empfohlenen Maßnahme (220) ferner umfasst, dass der Benutzer einen Befehl an das Gerät zum Ausführen der empfohlenen Maßnahme für die Pflege des Rasens in der zugeordneten Zone (104) bereitstellt.

6. Verfahren nach einem der Ansprüche 4-5, wobei das Bereitstellen eines Befehls für die Ausführung der empfohlenen Maßnahme (220) ferner umfasst, dass der Benutzer die empfohlene Maßnahme für die Pflege des Rasen in der zugeordneten Zone (104) manuell ausführt.

7. Verfahren nach einem der Ansprüche 3-6, wobei das Vorhandensein eines verbundenen Geräts abgefragt wird, um zu bestimmen, ob die empfohlene Maßnahme (220) dem Benutzer angezeigt oder an das verbundene Gerät gesendet wird.

8. Verfahren nach einem der Ansprüche 1-7, wobei die empfohlene Maßnahme (220) für die Pflege des Rasens in der zugeordneten Zone (104) wenigstens eines umfasst von: Bewässerung, Belüftung, Räuchern, Düngung, Bodenbearbeitung, Mähen, Anwenden von Chemikalien, Blasen und Walzen.

9. Verfahren nach einem der Ansprüche 1-8, wobei, wenn der zugeordnete geschätzte Rasenzustand (210) für die Zone (104) innerhalb eines bestimmten Satzes von Betriebsparametern liegt, die empfohlene Maßnahme (220) für die Pflege des Rasens in der zugeordnete Zone keine Maßnahme ist.

10. Verfahren nach einem der Ansprüche 1-9, wobei das Messen des Rasenzustands (230) das Sammeln von Daten von wenigstens einem von einem oder mehreren Sensoren, einer Beobachtung und einer Rückmeldung umfasst.

11. Verfahren nach Anspruch 10, wobei der eine oder die mehreren Sensoren wenigstens eines beinhalten von: Lichtreflexionssensoren, digitaler Bildanalyse, Oberflächenhärtesensor, Penetrometer oder Feuchtigkeitssensor.

12. Verfahren nach einem der Ansprüche 10-11, wobei die Beobachtung wenigstens eines beinhaltet von: visueller Bewertung der Rasenqualität, Krankheitsbefall, Unkrautbefall, Schädlingsbefall oder andere qualitative oder quantitative Messungen von Rasenzuständen oder der Stressreaktion.

13. Verfahren nach einem der Ansprüche 10-12, wobei die Rückmeldung wenigstens eines beinhaltet von: Bewertung der Qualität, Bespielbarkeit, Oberflächenzuständen, Berichten von Anwohnern, Kommentaren von Benutzern, anderen Eingaben von Beobachtern und Benutzern hinsichtlich der Benutzerfreundlichkeit und Wahrnehmung oder anderen qualitativen oder quantitativen Messungen zum Vergleich mit einem gewünschten Rasenzustand (240).

14. Verfahren nach einem der Ansprüche 1-13, wobei der geschätzte Rasenzustand (230) für jede Zone (104) durch ein prädiktives Rasenmodell (140) bestimmt wird.

15. Verfahren nach einem der Ansprüche 1-14, wobei jede Zone (104) durch einen einzelnen Knoten (110) definiert ist, der eine Darstellung eines Mikroklimas der jeweiligen Zone bereitstellt.

## Revendications

1. Procédé de gestion de gazon dans une région de travail (102), le procédé étant **caractérisé par** :
la fourniture d'un état de gazon estimé (210) pour chaque zone (104) d'une pluralité de zones divisant la région de travail, chaque zone étant dimensionnée et mise en forme pour capturer des conditions environnementales homogènes dans la même zone ;
la génération d'une action recommandée (220) pour chaque zone en fonction de l'état de gazon estimé associé pour chaque zone en tant qu'entrée dans un modèle de suggestion (145) ;
la fourniture d'un ordre à un équipement pour réaliser l'action recommandée afin de gérer le gazon dans la zone associée ;
la mesure d'un état de gazon (230) en réponse à l'action réalisée pour gérer le gazon dans la zone associée ; et
l'actualisation du modèle de suggestion en réponse à l'état de gazon mesuré et à un état de gazon souhaité (240) en fonction de l'action réalisée pour gérer le gazon.

2. Procédé selon la revendication 1, comprenant en outre l'enregistrement et la transmission d'une action réalisée à un réseau.

3. Procédé selon l'une quelconque des revendications 1 et 2, dans lequel la fourniture d'un ordre pour réaliser l'action recommandée comprend le fait d'ordonner automatiquement à un équipement connecté d'réaliser l'action recommandée (220) pour gérer le gazon dans la zone associée (104).

4. Procédé selon l'une quelconque des revendications 1 à 3, dans lequel la fourniture d'un ordre pour réaliser l'action recommandée (220) comprend l'affichage de l'action recommandée pour la zone associée (104) à un utilisateur.

5. Procédé selon la revendication 4, dans lequel la fourniture d'un ordre pour réaliser l'action recommandée (220) comprend en outre la fourniture par l'utilisateur d'un ordre à l'équipement pour réaliser l'action recommandée afin de gérer le gazon dans la zone associée (104).

6. Procédé selon l'une quelconque des revendications 4 et 5, dans lequel la fourniture d'un ordre pour réaliser l'action recommandée (220) comprend en outre la réalisation manuelle par l'utilisateur de l'action recommandée pour gérer le gazon dans la zone associée (104).

7. Procédé selon l'une quelconque des revendications 3 à 6, dans lequel la présence d'un équipement connecté est vérifiée afin de déterminer si l'action recommandée (220) est affichée à l'utilisateur ou envoyée à l'équipement connecté.

8. Procédé selon l'une quelconque des revendications 1 à 7, dans lequel l'action recommandée (220) pour gérer le gazon dans la zone associée (104) comprend au moins une des actions suivantes : une irrigation, une aération, une fumigation, une fertilisation, une culture, une tonte, une application de produits chimiques, un soufflage, et un roulage.

9. Procédé selon l'une quelconque des revendications 1 à 8, dans lequel, lorsque l'état de gazon estimé (210) associé pour ladite zone (104) se situe dans un certain ensemble de paramètres de fonctionnement, l'action recommandée (220) pour gérer le gazon dans la zone associée est de ne prendre aucune action.

10. Procédé selon l'une quelconque des revendications 1 à 9, dans lequel la mesure de l'état de gazon (230) comprend la collecte de données à partir d'au moins un élément parmi un ou plusieurs capteurs, une observation, et un retour d'information.

11. Procédé selon la revendication 10, dans lequel le ou les capteurs incluent au moins un élément parmi : des capteurs de réflectance de lumière, une analyse d'image numérique, un capteur de dureté de surface, un pénétromètre, ou un capteur d'humidité.

12. Procédé selon l'une quelconque des revendications 10 et 11, dans lequel l'observation inclut au moins un des éléments suivants : des évaluations visuelles de la qualité de gazon, une incidence de maladies, une invasion de mauvaises herbes, une infestation de nuisibles, ou d'autres mesures qualitatives ou quantitatives d'états de gazon ou de réponse au stress.

13. Procédé selon l'une quelconque des revendications 10 à 12, dans lequel le retour d'information inclut au moins un des éléments suivants : une évaluation de qualité, une jouabilité, des états de surface, des signalements de riverains, des commentaires d'utilisateurs, d'autres entrées provenant d'observateurs et d'utilisateurs concernant l'utilisabilité et la perception, ou d'autres mesures qualitatives ou quantitatives de comparaison avec un état de gazon souhaité (240).

14. Procédé selon l'une quelconque des revendications 1 à 13, dans lequel l'état de gazon estimé (230) pour chaque zone (104) est déterminé par un modèle prédictif de gazon (140).

15. Procédé selon l'une quelconque des revendications 1 à 14, dans lequel chaque zone (104) est définie par un nœud unique (110) fournissant une représentation d'un microclimat de la zone respective.
